# FASCICULE DE BREVET EUROPEEN

(11) **EP 2 952 706 B1**
(45) Date de publication et mention de la délivrance du brevet: **15.03.2017**
(21) Numéro de dépôt: 15168561.7
(22) Date de dépôt: 21.05.2015
(51) Int. Cl.: F01N 5/02, F28D 20/02, F02G 5/02, F28D 21/00, F28D 20/00, F01N 9/00, F28F 9/02

(54) **DISPOSITIF D'ÉCHANGE DE CHALEUR, LIGNE D'ÉCHAPPEMENT D'UN MOTEUR THERMIQUE ET MODULE THERMOÉLECTRIQUE COMPRENANT UN TEL DISPOSITIF**
WÄRMETAUSCHERVORRICHTUNG, AUSPUFFLEITUNG EINES VERBRENNUNGSMOTORS UND THERMOELEKTRISCHES MODUL, DAS EINE SOLCHE VORRICHTUNG UMFASST
HEAT-EXCHANGE DEVICE, EXHAUST LINE OF A COMBUSTION ENGINE AND THERMOELECTRIC MODULE INCLUDING SUCH A DEVICE

(30) Priorité: 04.06.2014 FR 1455072
(43) Date de publication de la demande: 09.12.2015
(73) Titulaire: Valeo Systemes Thermiques, 78320 Le Mesnil-Saint-Denis (FR)
(72) Inventeur: Tissot, Julien, 92800 Puteaux (FR); Traore, Issiaka, 92400 Courbevoie (FR); Azzouz, Kamel, 75012 Paris (FR); De Vaulx, Cédric, 78770 Autouillet (FR)
(74) Mandataire: Metz, Gaëlle

(56) Documents cités:
- WO-A1-2011/037527
- DE-A1-102011 121 471
- FR-A1- 2 698 909
- US-A1- 2011 048 388
- US-A1- 2012 073 276

## Description

L'invention concerne un dispositif d'échange de chaleur, une ligne d'échappement d'un moteur thermique comprenant un tel dispositif et un module thermoélectrique comprenant un tel dispositif.

Dans le domaine automobile, il a déjà été proposé des dispositifs thermoélectriques utilisant des éléments, dits thermoélectriques, permettant de générer un courant électrique en présence d'un gradient de température entre deux de leurs faces opposées selon le phénomène connu sous le nom d'effet Seebeck. Ces dispositifs sont aussi appelés générateurs thermoélectriques.

Il est connu de positionner ces générateurs thermoélectriques dans une ligne d'échappement de véhicule automobile, voire dans le circuit de gaz d'échappement recirculés pour les véhicules automobiles présentant un tel circuit entre l'échappement et l'admission du moteur thermique. L'objectif est l'utilisation de la chaleur des gaz d'échappement des véhicules automobile pour générer de l'énergie électrique.

Cependant, lorsqu'ils sont utilisés dans une ligne d'échappement ou dans un circuit de gaz d'échappement recirculés, lesdits générateurs thermoélectriques subissent des températures avec des pics pouvant atteindre 450°C, par exemple. Cela nécessite de concevoir des générateurs thermoélectriques à l'aide de matériaux résistants à de hautes températures, voire de prévoir un système complexe de conduits de dérivation pour limiter les montées en température dans lesdits générateurs thermoélectriques, en particulier à leur entrée.

L'invention propose de limiter les contraintes thermiques subies par les générateurs thermoélectriques lorsqu'ils sont positionnés le long d'une ligne d'échappement d'un moteur thermique.

Ainsi, l'invention concerne une ligne d'échappement comportant un dispositif d'échange de chaleur comprenant un corps destiné à être positionné le long de la ligne d'échappement de gaz et un matériau à changement de phase, ledit corps étant configuré pour que le matériau à changement de phase change de phase en fonction de la température desdits gaz, ledit dispositif étant positionné dans un conduit de dérivation de ladite ligne d'échappement et le ledit conduit de dérivation étant situé en amont d'un module thermoélectrique.

La ligne d'échappement comportant le dispositif d'échange de chaleur selon l'invention permet de la sorte de faire un contrôle passif de la température des gaz d'échappement et ainsi, de lisser la température, en particulier sur la partie du générateur thermoélectrique destinée à entrer en contact avec lesdits gaz. L'invention permet donc de réduire les contraintes thermiques subies par le générateur thermoélectrique.

Elle permet aussi d'en simplifier la conception. En effet, il n'est plus nécessaire de prévoir sa conception avec des matériaux résistants à de hautes températures.

D'autre part, le courant électrique délivré par le générateur thermoélectrique est optimisé car le dispositif de l'invention réduit les pics et les fluctuations de température à son entrée.

Autrement dit, le matériau à changement de phase permet de stabiliser la température du fluide qui sort du moteur thermique en direction du générateur thermoélectrique.

Selon différents modes de réalisation de l'invention, qui pourront être pris ensemble ou séparément :
- ledit matériau est apte à emmagasiner et/ou à restituer de la chaleur lors de ses changements de phase,
- ledit matériau est apte à changer de phase à une température de fusion/solidification qui est constante,
- ladite température de fusion est comprise entre 300 et 450°C, notamment de l'ordre de 337°C,
- ledit matériau est un eutectique,
- ledit matériau présente une chaleur latente de fusion comprise entre 100 et 300kJ/kg, notamment voisine de 115kJ/kg,
- le corps comprend un conteneur à l'intérieur duquel le matériau à changement de phase est encapsulé,
- ledit conteneur est un tube à l'intérieur duquel le matériau à changement de phase est arrangé sous la forme d'un nid d'abeille,
- ledit corps comprend un faisceau d'échange de chaleur à l'intérieur duquel le matériau à changement de phase est encapsulé,
- ledit faisceau d'échange de chaleur est de type coaxial,
- ledit corps est configuré pour chemiser une partie de ladite ligne d'échappement.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une représentation schématique d'une ligne d'échappement comprenant un circuit de dérivation,
- la figure 2 est une représentation schématique d'une ligne d'échappement comprenant un dispositif non revendiqué positionné le long de ladite ligne d'échappement,
- la figure 3 est une représentation schématique d'une ligne d'échappement comprenant un circuit de dérivation et un dispositif non revendiqué positionné le long de ladite ligne, ceci selon une première configuration,
- la figure 4 est une représentation schématique d'une ligne d'échappement selon l'invention comprenant un circuit de dérivation et un dispositif positionné le long de ladite ligne, ceci selon une seconde configuration,
- la figure 5 à 9 sont des représentations schématiques de cinq exemples de réalisation du dispositif.

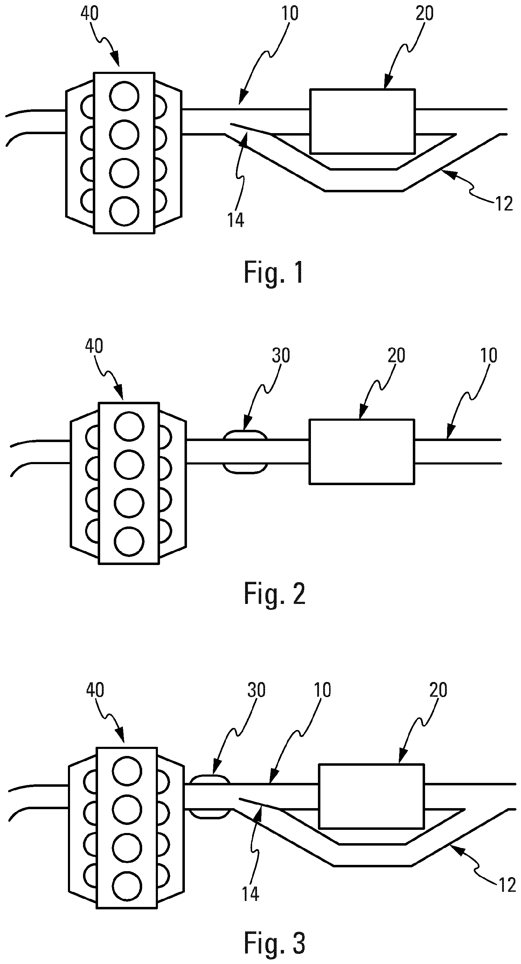

Il est connu de prévoir un générateur thermoélectrique 20 dans une ligne d'échappement de gaz 10, par exemple en sortie du moteur thermique 40 d'un véhicule automobile, afin d'utiliser la chaleur de ses gaz d'échappement, ceci dans le but de produire de l'énergie électrique (voir figure 1). Cependant, les gaz d'échappement pouvant atteindre des températures élevées, par exemple de l'ordre de 450°C, il est aussi connu de prévoir un circuit de dérivation 12 avec une soupape de dérivation 14 pour dériver une partie desdits gaz. La température des gaz d'échappement est ainsi contrôlée et le générateur thermoélectrique 20 est protégé.

Le dispositif d'échange de chaleur 30 permet de renforcer cette protection.

Ainsi, le dispositif de l'invention 30 comprend un corps destiné à être positionné le long d'une ligne d'échappement de gaz 10 et un matériau à changement de phase 32, ledit corps étant configuré pour que le matériau à changement de phase 32 change de phase en fonction de la température desdits gaz.

La figure 2 illustre un dispositif de l'invention 30 positionné le long de la ligne d'échappement 10, entre le moteur thermique 40 et un générateur thermoélectrique 20. Lorsque la température des gaz sortant du moteur 40 est trop haute, le matériau à changement de phase 32, avantageusement encapsulé dans le corps, fond et, par conséquent, emmagasine de l'énergie thermique par fusion, autrement dit, par changement de phase solide-liquide. On entend par température trop haute, une température des gaz supérieure à la température de solidification du matériau à changement de phase 32.

Le matériau à changement de phase 32 met donc à profit sa capacité d'absorption d'énergie thermique pendant son changement de phase. C'est ainsi que sont réduits les pics et les fluctuations de température en entrée du générateur thermoélectrique 20.

L'énergie emmagasinée lors d'une période où la température des gaz est trop élevée permet de les réchauffer lorsque leur température est trop basse. Cela permet le retour du matériau à changement de phase à l'état solide et, ainsi, d'améliorer encore le rendement du générateur thermoélectrique 20.

La figure 3 illustre le cas où un circuit de dérivation 12 et sa soupape de dérivation 14 ont été maintenu dans la ligne d'échappement, ceci pour des raisons de sécurité au cas où la température des gaz serait encore trop élevée malgré le dispositif d'échange de chaleur 30. On peut constater sur cette figure 3, que le dispositif d'échange de chaleur 30 est positionné en amont du circuit de dérivation 12 et donc, qu'il provoque des pertes de charge, même quand les gaz n'ont pas besoin d'être refroidis.

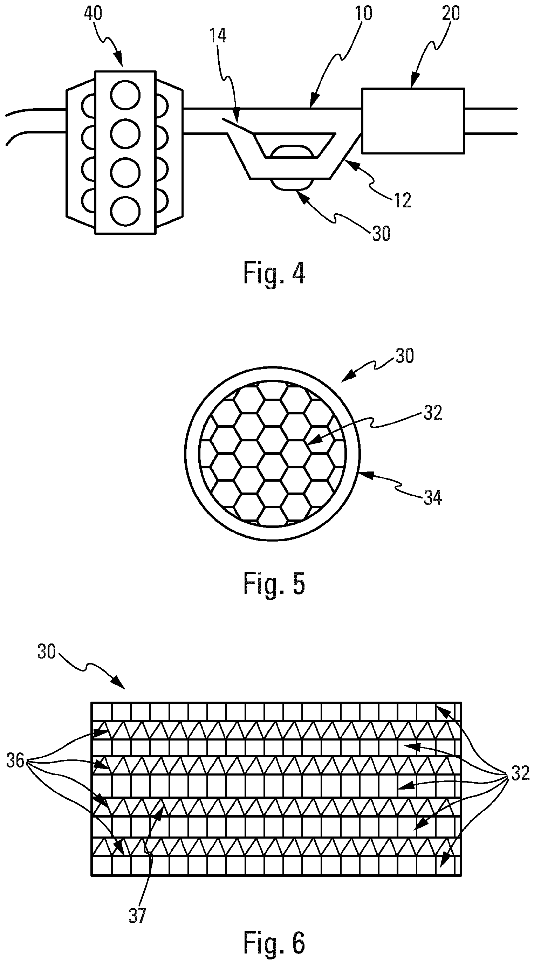

La figure 4 illustre le cas où le dispositif selon l'invention 30 est positionné le long du conduit de dérivation 12 de ladite ligne d'échappement 10, avec un positionnement dudit conduit de dérivation en amont du générateur thermoélectrique 20. Cette alternative de positionnement permet d'optimiser le cas illustré à la figure 3 en terme de pertes de charge. Dans le cas de cette alternative, quand la température des gaz est faible, lesdits gaz peuvent être détourné par la soupape de dérivation 14 vers le dispositif de l'invention 30 qui est situé dans le circuit de dérivation 12. Ainsi, le matériau à changement de phase peut repasser d'une phase liquide à une phase solide et les gaz sont réchauffés avant d'être envoyé vers le générateur thermoélectrique 20 car le dispositif d'échange de chaleur 30 libère l'énergie emmagasinée lors d'une période où la température des gaz était trop élevée.

Il est à noter que ledit dispositif 30 pourra aussi être positionné dans un circuit de gaz d'échappement recirculés de véhicule automobile (alternative non illustrée ici). Dans ce cas, il s'agit de la portion des gaz d'échappement recirculés circulant dans ledit circuit qui déterminent le changement de phase dudit matériau à changement de phase 32.

Il est à noter que la puissance électrique générée par générateur thermoélectrique 20 varie en fonction des alternatives de positionnement qui viennent d'être décrites avec les figures 2 à 4.

Ainsi, pour des conditions de débit de gaz de 43g/s et d'eau de 8,5g/s constants, et pour une température d'eau de 76°C, le gain en termes de puissance électrique produite par le générateur thermoélectrique 20 sera de 2,8% dans le cas du positionnement illustré à la figure 2, de 2,6% dans le cas du positionnement illustré à la figure 3 et de 25,9% dans le cas du positionnement illustré à la figure 4, pour un même cycle de fonctionnement moteur.

De plus, les générateurs thermoélectriques 20 destinés à être assemblés dans une ligne d'échappement de véhicule automobile sont habituellement conçus à l'aide de matériaux devant résister à de hautes températures. Associés au dispositif de l'invention 30, ils pourront être conçus à partir de matériaux moins nobles ; par exemple à partir de matériaux de la famille des plastiques par exemple. En effet, ledit dispositif 30 absorbera les contraintes thermiques en amont du générateur thermoélectrique 20 et ainsi, le protégera thermiquement.

Comme cela vient d'être décrit, le matériau à changement de phase 32 est apte à emmagasiner et/ou à restituer de la chaleur lors de ses changements de phase. Plus précisément, il sera apte à changer de phase à une température de fusion qui est constante. Ladite température de fusion sera de préférence comprise entre 300 et 450°C, notamment de l'ordre de 337°C ; l'objectif étant alors de stabiliser la température en amont du générateur thermoélectrique 20 à une valeur inférieure à 380°C.

Cependant, cet exemple de température de fusion n'est pas limitatif. Le choix du matériau à changement de phase 32 sera aussi fait en fonction des éléments thermoélectriques formant le générateur thermoélectrique 20.

Pour cela, il nous faut ici introduire la définition de la température de la face chaude d'un générateur thermoélectrique 20.

La température de la face chaude d'un générateur thermoélectrique 20 est la température mesurée au niveau des éléments thermoélectriques qui le composent. Cette température de la face chaude est différente de celle des gaz d'échappement car de nombreuses interfaces séparent les éléments thermoélectriques des gaz d'échappement, notamment des parois de conduits de circulation des gaz, des pistes électriques, différentes couches de matériaux isolants et/ou de jonction...

Il est à noter que la température maximale de la face chaude est toujours inférieure à la température des gaz d'échappement.

Ainsi, lorsque les éléments thermoélectriques sont en matériaux de type Tellurures (Bi2Te3/Sb2Te3), la température maximale de la face chaude du générateur thermoélectrique 20 sera de l'ordre de 300°C. Cela entraine un choix de matériau à changement de phase 32 particulier.

De même, lorsque les éléments thermoélectriques sont en matériaux de type Siliciures (Mg2Si/MnSi), par exemple, la température maximale de la face chaude du générateur thermoélectrique 20 sera de l'ordre de 600°C ; tandis que lorsque les éléments thermoélectriques sont en Skuttérudites (CoSb), la température maximale sera de l'ordre de 800°C.

Le choix du matériau à changement de phase 32 se fera par comparaison de sa température de fusion à celle de la face chaude du générateur thermoélectrique 20 en amont duquel le dispositif de l'invention 30 sera positionné. Cette température de fusion sera choisie de telle sorte qu'elle soit inférieure à la température maximale de la face chaude dudit générateur thermoélectrique 20. La différence entre ladite température de fusion et la température maximale de la face chaude dudit générateur thermoélectrique 20 sera comprise entre 5°C et 50°C. Elle sera par exemple de l'ordre de 10°C.

Un second critère de sélection du matériau à changement de phase 32 sera sa chaleur latente de changement de phase pour lui garantir une capacité de stockage d'énergie thermique satisfaisante.

Un exemple préféré de matériau à changement de phase 32 appartiendra à la famille des matériaux eutectiques et présentera, avantageusement, une chaleur latente de fusion comprise entre 100kJ/kg et 300kJ/kg, notamment entre 100kJ/kg et 150kJ/kg et en particulier voisine de 115kJ/kg.

Le corps dans lequel le matériau à changement de phase est situé présente avantageusement une faible résistance thermique afin d'assurer un bon échange thermique entre ledit matériau 32 et les gaz d'échappement.

Plusieurs exemples de réalisation du dispositif d'échange de chaleur 30 sont illustrés aux figures 5 à 9.

L'exemple de la figure 5 illustre un corps qui comprend un conteneur 34 à l'intérieur duquel le matériau 32 à changement de phase est encapsulé. Plus particulièrement, ledit conteneur 34 est un tube à l'intérieur duquel le matériau à changement de phase 32 est arrangé, ici, sous la forme d'un nid d'abeille, définissant de façon alternative des conduits de passage des gaz et des cellules de stockage du matériau à changement de phase.

La figure 6 illustre un exemple de corps qui comprend un faisceau d'échange de chaleur 36, 37 à l'intérieur duquel le matériau à changement de phase 32 est encapsulé, en particulier entre des surfaces additionnelles 37 d'échange de chaleur. Plus précisément, ledit faisceau d'échange de chaleur 36, 37 est ici de type coaxial, définissant alternativement des canaux de circulation des gaz, munis des surfaces 37 et des espaces de stockage dudit matériau à changement de phase.

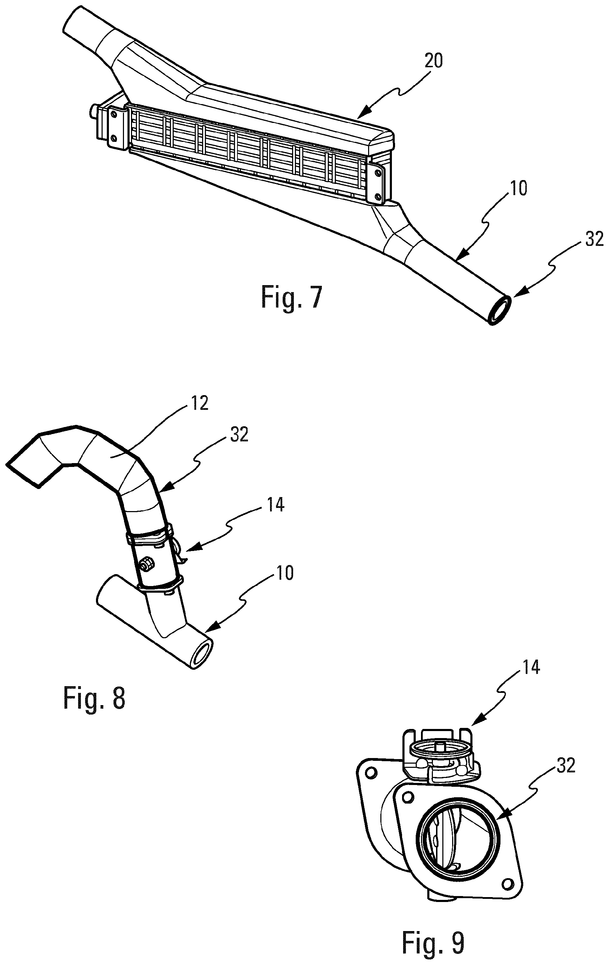

La figure 7 illustre un exemple de réalisation non revendiqué dans lequel le matériau à changement de phase 32 est intégré directement dans la ligne d'échappement 10, en amont d'un générateur thermoélectrique 20.

La figure 8 illustre un exemple de réalisation dans lequel ledit corps est configuré pour chemiser une partie de ladite ligne d'échappement 10. En particulier, ici, le corps comprenant le matériau à changement de phase 32 chemise un circuit de dérivation 12, voire la soupape associée 14.

La figure 9 illustre, quant à elle, un exemple de réalisation dans lequel le matériau à changement de phase 32 est intégré directement à une soupape de dérivation 14 dont une partie du corps forme le corps du dispositif conforme à l'invention.

Il est à noter que ces exemples de réalisation du dispositif d'échange de chaleur 30 ne sont pas associés à une configuration prédéfinie de ligne d'échappement 10. Bien que l'exemple illustré à la figure 9 soit particulièrement adapté à une configuration de ligne d'échappement comprenant un circuit de dérivation 12 et une soupape associée 14, il est aussi possible d'associer les exemples illustrés aux figures 5 à 8 à une ligne d'échappement 10 comprenant un circuit de dérivation 12.

Les exemples de réalisation décrits ci-dessus peuvent être combinés entre eux et adaptés sans limitation à l'ensemble des lignes d'échappement décrites avec les figures 2, 3 et 4.

Il est à noter que des variantes de réalisation sont bien sûr possibles. Notamment, dans un exemple de réalisation supplémentaire (non illustré), le matériau à changement de phase 32 sera intégré à un autre type d'échangeur de chaleur que les échangeurs de chaleur de type coaxiaux.

## Revendications

1. Ligne d'échappement (10) d'un moteur thermique (40) comportant un dispositif d'échange de chaleur (30) comprenant un corps destiné à être positionné le long de la ligne d'échappement de gaz (10) et un matériau à changement de phase (32), ledit corps étant configuré pour que le matériau à changement de phase (32) change de phase en fonction de la température desdits gaz, ledit dispositif (30) étant positionné dans un conduit de dérivation (12) de ladite ligne d'échappement, ladite ligne d'échappement étant **caractérisé en ce que** ledit conduit de dérivation (12) est situé en amont d'un module thermoélectrique (20)..

2. Ligne d'échappement (10) selon la revendication précédente, dans laquelle ledit matériau (32) est apte à changer de phase à une température de fusion/solidification qui est constante.

3. Ligne d'échappement (10) selon l'une quelconque des revendications 1 ou 2, dans laquelle ledit matériau (32) est un eutectique.

4. Ligne d'échappement (10) selon l'une quelconque des revendications précédentes, dans laquelle le corps comprend un conteneur (34) à l'intérieur duquel le matériau à changement de phase (32) est encapsulé.

5. Ligne d'échappement (10) selon la revendication précédente, dans laquelle ledit conteneur (34) est un tube à l'intérieur duquel le matériau à changement de phase (32) est arrangé sous la forme d'un nid d'abeille.

6. Ligne d'échappement (10) selon l'une quelconque des revendications 1 à 3, dans laquelle ledit corps comprend un faisceau d'échange de chaleur (36, 37) à l'intérieur duquel le matériau à changement de phase (32) est encapsulé.

7. Ligne d'échappement (10) selon la revendication précédente, dans laquelle ledit faisceau d'échange de chaleur (36, 37) est de type coaxial.

8. Ligne d'échappement (10) selon l'une quelconque des revendications 1 à 3, dans laquelle ledit corps est configuré pour chemiser une partie de ladite ligne d'échappement (10).

## Patentansprüche

1. Abgasleitung (10) eines Wärmekraftmotors (40), die eine Wärmetauschervorrichtung (30) aufweist, welche einen Körper, der dazu bestimmt ist, entlang der Abgasleitung (10) positioniert zu werden, und ein Phasenwechselmaterial (32) enthält, wobei der Körper so konfiguriert ist, dass das Phasenwechselmaterial (32) seine Phase abhängig von der Temperatur der Gase wechselt, wobei die Vorrichtung (30) in einem Bypasskanal (12) der Abgasleitung positioniert ist, wobei die Abgasleitung **dadurch gekennzeichnet ist, dass** der Bypasskanal (12) sich stromaufwärts vor einem thermoelektrischen Modul (20) befindet.

2. Abgasleitung (10) nach dem vorhergehenden Anspruch, wobei das Material (32) seine Phase bei einer Schmelz-/Erstarrungstemperatur wechseln kann, die konstant ist.

3. Abgasleitung (10) nach einem der Ansprüche 1 oder 2, wobei das Material (32) ein Eutektikum ist.

4. Abgasleitung (10) nach einem der vorhergehenden Ansprüche, wobei der Körper einen Behälter (34) enthält, in dessen Innerem das Phasenwechselmaterial (32) eingekapselt ist.

5. Abgasleitung (10) nach dem vorhergehenden Anspruch, wobei der Behälter (34) ein Rohr ist, in dessen Innerem das Phasenwechselmaterial (32) in Form eines Wabenmusters angeordnet ist.

6. Abgasleitung (10) nach einem der Ansprüche 1 bis 3, wobei der Körper ein Wärmetauscherbündel (36, 37) enthält, in dessen Innerem das Phasenwechselmaterial (32) eingekapselt ist.

7. Abgasleitung (10) nach dem vorhergehenden Anspruch, wobei das Wärmetauscherbündel (36, 37) von koaxialer Art ist.

8. Abgasleitung (10) nach einem der Ansprüche 1 bis 3, wobei der Körper konfiguriert ist, einen Teil der Abgasleitung (10) zu verkleiden.

## Claims

1. Exhaust line (10) of a combustion engine (40) comprising a heat exchange device (30) comprising a body intended to be positioned along the gas exhaust line (10) and a phase-change material (32), the said body being configured so that the phase-change material (32) changes phase according to the temperature of the said gases, the said device (30) being positioned in a bypass pipe (12) of the said exhaust line, the said exhaust line being **characterized in that** the said bypass pipe (12) is situated upstream of a thermoelectric module (20).

2. Exhaust line (10) according to the preceding claim, in which the said material (32) is able to change phase at a melting/solidification temperature which is constant.

3. Exhaust line (10) according to either one of Claims 1 and 2, in which the said material (32) is a eutectic.

4. Exhaust line (10) according to one of the preceding claims, in which the body comprises a container (34) inside which the phase-change material (32) is encapsulated.

5. Exhaust line (10) according to the preceding claim, in which the said container (34) is a tube inside which the phase-change material (32) is arranged in the form of a honeycomb.

6. Exhaust line (10) according to any one of Claims 1 to 3, in which the said body comprises a heat-exchange core bundle (36, 37) inside which the phase-change material (32) is encapsulated.

7. Exhaust line (10) according to the preceding claim, in which the said heat exchange core bundle (36, 37) is of the coaxial type.

8. Exhaust line (10) according to any one of Claims 1 to 3, in which the said body is configured to jacket part of the said exhaust line (10).
